# EUROPEAN PATENT SPECIFICATION

(11) **EP 1 019 332 B1**
(45) Date of publication and mention of the grant of the patent: **13.07.2005**
(21) Application number: 98939665.0
(22) Date of filing: 17.08.1998
(51) Int. Cl.: C03C 13/00, C03C 13/06

(54) **MINERAL FIBRE**
MINERALFASER
FIBRE MINERALE

(30) Priority: 15.08.1997 FI 973355
(43) Date of publication of application: 19.07.2000
(73) Proprietor: Paroc Group Oy Ab, 01300 Vantaa (FI)
(72) Inventor: PERANDER, Michael, FIN-21600 Pargas (FI); HAKALA, Jan, FIN-20380 bo (FI)
(74) Representative: Grew, Eva Regina
(86) International application number: PCT/FI1998/000632
(87) International publication number: WO 1999/008970

(56) References cited:
- WO-A2-96/14274
- WO-A2-96/14454
- FR-A1- 2 662 687
- GB-A- 2 301 351
- STN INTERNATIONAL, File CA, CHEMICAL ABSTRACTS, Volume 81, 24 July 1974, Abstract No. 175133v, NITTO BOSEEKI CO. LTD., "Glass Composition for Making Glass Fiber with High Tensile Strength"; & JP,A,49 076 913.

## Description

The object of the present invention is fiberizable mineral composition as well as mineral fibres made therefrom, which have a high temperature resistance.

Mineral fibres made by melting and centrifuging of mineral raw materials, such as stone, slag or the like, are extensively used for the manufacture of mineral fibre mats and blankets, primarily for heat and sound insulation purposes within the construction industry. In addition to the manufactured mat exhibiting good insulation properties against heat and sound, in recent times one has started to pay increasingly more attention to the properties of the mat also from the point of view of labour hygiene.

A wide range of insulation products are available on the market, which products do not only exhibit different heat insulation properties, but also a varying degree of temperature resistance. Temperature resistant mineral fibre products are products which can resist increased temperatures during prolonged periods of time without changing form or dimensions to any higher degree. Such products are thus attractive from a fire protection point of view.

Conventional glass fibre has a temperature resistance at temperatures up to appr. 550 °C, whereas the temperature resistance of conventional rock wool is better, up to appr. 700 °C. However, there is an interest for products having an even higher temperature resistance, up to 1100 - 1200 °C, and such products are also available on the market.

Such temperature resistant fibre products contain as the main oxides silicium oxide SiO₂ and aluminium oxide, Al₂O₃, and, in addition, often also an earth alkali metaloxide, such as calcium oxide, CaO, or magnesium oxide, MgO. In addition, such products can contain varying degrees of other oxides, such as titanium oxide, TiO₂, manganese oxide, MnO, boron oxide, B₂O₃, zirconium oxide, ZrO₂, chromium oxide, Cr₂O₃, the alkali oxides sodium and potassium oxide, Na₂O, K₂O, as well as impurities. As examples of relevant prior art in this respect reference is made, for example, to US 4, 461, 840 and DE-OS 1 496 662.

Such temperature resistant fibre products generally contain an increased amount of Al₂O₃, and often relatively high amounts of iron oxide, FeO and Fe₂O₃. The presence of iron is due to the fact that many economically attractive raw materials contain iron to higher or lesser degree. However, the presence of aluminium and iron in large amounts makes the fibre brittle and unelastic, which makes the fibre difficult to handle.

According to the invention it has now been shown that this disadvantage can be eliminated by including phosphorus in the fibre. The addition of phosphorus increases the elasticity and tenacity of the aluminium and iron containing fibre. This in turn leads to improved handling properties for the fibre products. As the fibre products can be compressed elastically, the need for space, for example, during storing and transport, decreases. As a consequence of the elasticity the product regains its original shape after the release of the compression, and in use well fills all spaces in the building construction. In addition, the tendency for dust formation decreases due to the decreased fibre brittleness. It has also become evident that it is possible to use an increased concentration of alkalis in such fibres, which can be of advantage in certain applications.

More specifically the invention is directed to a mineral fibre which contains the following components in % by weight, whereby the components add up to 100% by weight:

| | |
|---|---|
| SiO₂ | 38 - 47 |
| Al₂O₃ | 16 - 20 |
| TiO₂ | 0 - 4 |
| MgO | 5 - 15 |
| CaO | 14 - 22 |
| Na₂O + K₂O | 0 - 6 |
| iron (FeO+Fe₂O₃) | 3 - 10 |
| P₂O₅ | 0.5 - 4 |
| other | 0 - 4 |

The term "other" components means such possible contaminants which are not of essential importance for the properties of the manufactured fibre.

It is known that within the range 0 - appr. 15 % the aluminium oxide concentration is directly proportional to the stability of the fibre in biological solutions, that is, the more aluminium oxide the composition contains, the more stable or poorly soluble the product is. However, this tendency is reversed at a higher concentration so that the solubility of the fibre is increased with the aluminium oxide concentration. Thus, according to the invention a fibre has been obtained which has good heat resistance, good elasticity and high solubility in biological solutions.

In the above mentioned composition, MgO is preferably 5 - 12 % by weight.

According to an advantageous embodiment the invention is directed to a mineral fibre having the following composition in % by weight, whereby the components add up to 100% by weight:

| | |
|---|---|
| SiO₂ | 40 - 44 |
| Al₂O₃ | 16 - 20 |
| TiO₂ | 0 - 4 |
| MgO | 8 - 12 |
| CaO | 16 - 22 |
| Na₂O + K₂O | 2 - 5 |
| iron (FeO+Fe₂O₃) | 3 - 8 |
| P₂O₅ | 0.5 - 2 |
| other | 0 - 4 |

The fibre according to the invention is made in a conventional manner by mixing suitable raw materials such as stone, slag, bauxite, dolomite, apatite, anorthosite, glass or different slags and other suitable waste materials in suitable proportions, either as such or as briquettes. The raw materials are then melted, for example in an electrical or cupola furnace, and then made into fibres in any conventional manner, for example by cascade centrifugation of the melt and collecting the fibres on a conveyor.

The following examples illustrates the invention without restricting the same.

### Example 1

The following components having the compositions indicated in the following table, were charged in a cupola furnace in the amounts indicated in % by weight.

| | Apatite containing peridotite | Dolomite | Gabbroanorthosite |
|---|---|---|---|
| amount: component: % by weight | 32 | 20 | 48 |
| SiO₂ | 45.5 | 8.0 | 45.6 |
| Al₂O₃ | 9.9 | 1.6 | 30.1 |
| TiO₂ | 1.8 | 0.2 | 0.2 |
| MgO | 11.4 | 17.8 | 2.3 |
| CaO | 13.7 | 30.1 | 16.9 |
| Na₂O + K₂O | 4.5 | 0.6 | 1.5 |
| iron | 9.7 | 1.7 | 2.7 |
| P₂O₅ | 2.2 | 0.1 | 0.0 |
| loss on ignition | 1.4 | 39.9 | 0.7 |

Fibres were made by cascade centrifugation in a conventional manner from the obtained melt, which fibres were collected on a conveyor to form a mineral fibre mat. The mineral fibres had the following composition in % by weight

| | |
|---|---|
| SiO₂ | 42.0 |
| Al₂O₃ | 19.0 |
| TiO₂ | 1.0 |
| MgO | 10.0 |
| CaO | 19.0 |
| Na₂O + K₂O | 3.0 |
| iron (FeO+Fe₂O₃) | 4.0 |
| P₂O₅ | 1.0 |
| other | 1.0. |

### Example 2

By choosing suitable raw materials, on the one hand fibres according the invention (fibre A) as well as a comparison fibres (fibre B) were made in the same way as described in the Example 1. The fibres obtained had the following composition in % by weight:

| | A | B |
|---|---|---|
| SiO₂ | 42.1 | 43.9 |
| Al₂O₃ | 18.7 | 19.6 |
| TiO₂ | 1.7 | 0.6 |
| MgO | 10.4 | 11.3 |
| CaO | 15.8 | 17.0 |
| Na₂O + K₂O | 2.9 | 1.7 |
| iron (FeO+Fe₂O₃) | 6.8 | 5.7 |
| P₂O₅ | 0.8 | 0.05 |
| other | 0.8. | 0.2 |

The fibres A and B contain approximately the same amount of aluminium oxide plus iron oxide, but fibre B contains only an insignificant amount of phosphorus, whereas that of fibre A is within the limits of the invention.
The compressibility of a fibre mat having a density of 27 kg/m³ made from the fibres A and B respectively, was then measured in the following way. A test specimen (size 30 x 30 cm) of the mat made from the fibres A and B, respectively was compressed in a compressing device between two plates to a thickness corresponding to 20% of its original thickness. The test specimen was kept in the compressed state for 5 minutes, whereafter the compressive force was released and the specimen was allowed to return to its original form for appr. 1 min. The test mat from fibre A according to the invention showed a recovery in this test of 93-94 % (after pressure release, the specimen regained 93-94 % of its original thickness) which is a normal value, whereas that of the comparison fibre B was 89-91 %, which value is close to the limits of acceptability. Thus the test results show that when the mat made from the fibre A according to the invention has a better compressibility than the reference fibre B.

## Claims

1. Mineral fibre, **characterized in that** it has the following composition in % by weight, whereby the components add up to 100% by weight:
| | |
|---|---|
| SiO₂ | 38 - 47 |
| Al₂O₃ | 16 - 20 |
| TiO₂ | 0 - 4 |
| MgO | 5 - 15 |
| CaO | 14 - 22 |
| Na₂O + K₂O | 0 - 6 |
| iron (FeO+Fe₂O₃) | 3 - 10 |
| P₂O₅ | 0.5 - 4 |
| other | 0 - 4 |

2. The mineral fibre according to claim 1, **characterized in that** in the composition, MgO is 5 - 12 % by weight.

3. The mineral fibre according to claim 1 or 2, **characterized in that** it has the following composition in % by weight:
| | |
|---|---|
| SiO₂ | 40 - 44 |
| Al₂O₃ | 16 - 20 |
| TiO₂ | 0 - 4 |
| MgO | 8 - 12 |
| CaO | 16 - 22 |
| Na₂O + K₂O | 2 - 5 |
| iron (FeO+Fe₂O₃) | 3 - 8 |
| P₂O₅ | 0.5 - 2 |
| other | 0 - 4 |

4. Product, **characterized in that** it contains a fibre according to claim 1, 2 or 3.

5. The product according to claim 4 in the form of a mat or blanket or a tubular bowl, especially for heat and/or sound insulation.

## Patentansprüche

1. Mineralfaser, **dadurch gekennzeichnet, dass** sie die folgende Zusammensetzung in Gew.-% aufweist, wobei die Komponenten zusammen genommen 100 Gew.-% ergeben:
| | |
|---|---|
| SiO₂ | 38 - 47 |
| Al₂O₃ | 16 - 20 |
| TiO₂ | 0 - 4 |
| MgO | 5 - 15 |
| CaO | 14 - 22 |
| Na₂O + K₂O | 0 - 6 |
| Eisen (FeO + Fe₂O₃) | 3 - 10 |
| P₂O₅ | 0,5 - 4 |
| andere | 0 - 4 |

2. Mineralfaser gemäß Anspruch 1, **dadurch gekennzeichnet, dass** MgO in der Zusammensetzung 5 - 12 Gew.-% beträgt.

3. Mineralfaser gemäß Anspruch 1 oder 2, **dadurch gekennzeichnet, dass** sie die folgende Zusammensetzung in Gew.-% aufweist:
| | |
|---|---|
| SiO₂ | 40 - 44 |
| Al₂O₃ | 16 - 20 |
| TiO₂ | 0 - 4 |
| MgO | 8 - 12 |
| CaO | 16 - 22 |
| Na₂O + K₂O | 2 - 5 |
| Eisen (FeO + Fe₂O₃) | 3 - 8 |
| P₂O₅ | 0,5 - 2 |
| andere | 0 - 4 |

4. Produkt, **dadurch gekennzeichnet, dass** es eine Faser gemäß Anspruch 1, 2 oder 3 enthält.

5. Produkt gemäß Anspruch 4 in Form einer Matte oder einer Decke oder einer Rohrschale, insbesondere zur Wärme- und/oder Schallisolierung.

## Revendications

1. Fibre minérale, **caractérisée en ce qu'**elle a la composition suivante, en % en poids, de sorte que les composants s'ajoutent jusqu'à 100% en poids :
| | |
|---|---|
| SiO₂ | 38-47 |
| Al₂O₃ | 16-20 |
| TiO₂ | 0-4 |
| MgO | 5-15 |
| CaO | 14-22 |
| Na₂O+K₂O | 0-6 |
| Fer (FeO + Fe₂O₃) | 3-10 |
| P₂O₅ | 0,5-4 |
| Autres | 0-4 |

2. Fibre minérale selon la revendication 1, **caractérisée en ce que**, dans la composition, MgO est de 5 à 12% en poids.

3. Fibre minérale suivant la revendication 1 ou 2, **caractérisée en ce qu'**elle a la composition suivante, en % en poids :
| | |
|---|---|
| SiO₂ | 40-44 |
| Al₂O₃ | 16-20 |
| TiO₂ | 0-4 |
| MgO | 8-12 |
| CaO | 16-22 |
| Na₂O+K₂O | 2-5 |
| Fer (FeO + Fe₂O₃) | 3-8 |
| P₂O₅ | 0,5-2 |
| Autres | 0-4 |

4. Produit, **caractérisé en ce qu'**il contient une fibre selon la revendication 1, 2 ou 3.

5. Produit selon la revendication 4, sous la forme d'un matelas ou d'une couverture ou d'un manchon tubulaire, en particulier pour isolation thermique et/ou acoustique
